# EUROPÄISCHE PATENTSCHRIFT

(11) **EP 1 380 533 B1**
(45) Veröffentlichungstag und Bekanntmachung des Hinweises auf die Patenterteilung: **12.04.2006**
(21) Anmeldenummer: 03014636.9
(22) Anmeldetag: 26.06.2003
(51) Int. Cl.: B66C 13/44, G05B 9/02

(54) **Steuereinrichtung für flurfreie Förderer**
Control device for overhead conveyor
Dispositif de commande pour convoyeur aérien

(30) Priorität: 11.07.2002 DE 10231902
(43) Veröffentlichungstag der Anmeldung: 14.01.2004
(73) Patentinhaber: Demag Cranes & Components GmbH, 58300 Wetter (DE)
(72) Erfinder: Münzebrock, Anton, 44139 Dortmund (DE); Nitidem, Etienne, 32657 Lemgo (DE); Praczyk, Jörg, 58300 Wetter (DE)
(74) Vertreter: Moser & Götze

(56) Entgegenhaltungen:
- EP-A- 0 547 280
- EP-A- 0 592 795
- DE-A- 3 706 325
- DE-A- 4 108 347

## Beschreibung

Die Erfindung betrifft einen flurfreien Förderer mit einer Steuereinrichtung, der mit mindestens einem Aktor versehen ist, insbesondere einem Kranfahr- und Katzfahrantrieb.

Eine Steuereinrichtung mit einem Hängetaster für einen Kranfahr- und einen Katzfahrantrieb eines Krans mit einer querverfahrbaren Katze ist, beispielsweise aus der EP 0 592 795 A1, bekannt, wobei der am Kran hängende Hängetaster zum Steuern der Bewegung eines oberhalb einer Bedienperson an der Katze angeordneten Hebezeugs dient. Der Hängetaster dient dabei zum Steuern der Auf- und Abbewegung des Hebezeugs. Mit ihm lässt sich gleichzeitig der Kranfahrantrieb und der Katzfahrantrieb steuern. Hierzu ist der Hängetaster über eine Steuerleitung mit den zugehörigen Antriebssteuerungen verbunden. Der Hängetaster löst dabei Steuersignale aus, die zur Steuerung übertragen werden. Neben den Steuersignalen werden vom Hängetaster auch manuell ausgelöste Sicherheitssignale erzeugt, beispielsweise ein von der Bedienperson ausgelöster Notstop des Hebezeugs. Die Übertragung der Steuer- und Sicherheitssignale erfolgt über parallel geführte Signalleitungen (Schlepp- oder Schleifleitungen) in Form von pegelabhängigen Schaltzuständen oder codierten stufenlosen Signalen (PWM-Code), wobei für jedes Steuer- und Sicherheitssignal mindestens eine Leitung verwendet wird.

Weiter ist es bekannt, bei flurfreien Förderern mit einer hohen Zahl von Sonderfunktionen bei Verwendung von Schleppleitungen die Steuer- und Sicherheitssignale über einen Datenbus zu übertragen. Dabei wird eine zentrale Steuerung eingesetzt, welche die Antriebe mittels der über den Datenbus übertragenen Steuersignale steuert. Die Übertragung der Sicherheitssignale erfolgt dabei getrennt von den Steuersignalen als pegelabhängige Schaltzustände über separate Schleppleitungen.

Nachteilig ist bei den bekannten Steuereinrichtungen, dass diese relativ aufwendig sind und dass es trotzdem zu Havarien und Kollisionen kommen kann, insbesondere wenn der Hängetaster und damit dessen Notstopp-Funktion ausfällt.

Die Aufgabe der Erfindung ist, einen flurfreien Förderer mit einer einfache Steuereinrichtung anzugeben, die eine erhöhte Betriebssicherheit der Förderer gewährleistet.

Die Aufgabe wird durch die Merkmale des Anspruchs 1 gelöst. Die Unteransprüche enthalten vorteilhafte Ausgestaltungen der Steuereinrichtung.

Die Lösung sieht vor, dass die Signalverbindung einen seriellen bidirektionalen Datenbus aufweist, über den die Signalübertragung zwischen der Steuereinheit und dem mindestens einem Aktor erfolgt, welcher hierzu mit einer entsprechenden Steuerung versehen ist, und dass pro Aktor eine Sicherheitssteuerung vorhanden ist, die alle über den Datenbus übertragenen Sicherheitssignale überwacht und beim Auftreten mindestens eines vorgegebenen Ereignisses mindestens einen Stillsetzbefehl an die mindestens eine Steuerung ausgibt. Es wird also nur ein einziger bidirektionaler Datenbus verwendet und alle über diesen einen Datenbus übertragenen Sicherheitssignale werden dezentral überwacht. Die Sicherheitssignale können manuell von der Bedienperson ausgelöst und auf den Datenbus gegeben sein oder aber die Aktoren selbst lösen die Sicherheitssignale aus, welche nach Prüfung durch die zugehörige dezentrale Sicherheitssteuerung zu einem Notstopp führen können. Auf diese Weise wird mittels einer vereinfachten Steuereinrichtung eine erhöhte Sicherheit beim Betrieb eines Förderers erzielt.

Eine einfache Ausführung sieht vor, dass die Steuereinheit ein mit einer elektrischen Steuerleitung verbundener Hängeschalter und die Sicherheitsschalteinheit dessen Notschalter ist.

Eine hohe Sicherheit ergibt sich, wenn die Sicherheitssteuerungen einen Sicherheitsschalter umfassen, der den zugeordneten Aktor beim Auftreten eines Ereignisses stillsetzt.

Zur Grundsicherung wird ein Notstopp ausgelöst, wenn eines der vorgegebenen Ereignisse der Ausfall der Steuereinheit ist.

Um auch im Falle des Ausfalls der Steuereinheit den Förderer mit hoher Sicherheit betreiben zu können, wird vorgeschlagen, dass die Steuereinheit fortlaufend in vorgegebenen Zeitabständen ein Aktivitätssignal aussendet und dass bei dessen Fehlen der Ausfall der Steuereinheit als Ereignis als eingetreten gilt.

Eine Vereinfachung der Konstruktion sieht vor, dass die Sicherheitssteuerung in die Steuerung, zu der sie gehört, integriert ist.

Eine komplette Sicherheitsüberwachung wird erzielt, wenn die Sicherheitssteuerung auch Signale weiterer Komponenten des Förderers überwacht, insbesondere Sensoren weiterer sicherheitsrelevanter Komponenten.

Erfolgt die Signalübertragung abschnittsweise über Schleifleitungen, so wird vorgeschlagen, dass die die Steuersignalübertragung und die Sicherheitssignalübertragung umfassende Signalübertragung abschnittsweise über Schleifleitungen erfolgt, die über Leitungstreiber angesteuert werden, die eine zeitliche Folge der Datenbussignale nach einem vorgegebenen Protokoll gewährleisten.

Die Funktionalität der Steuereinheit lässt sich vergrößern, wenn die Steuereinheit in einem PC realisiert ist.

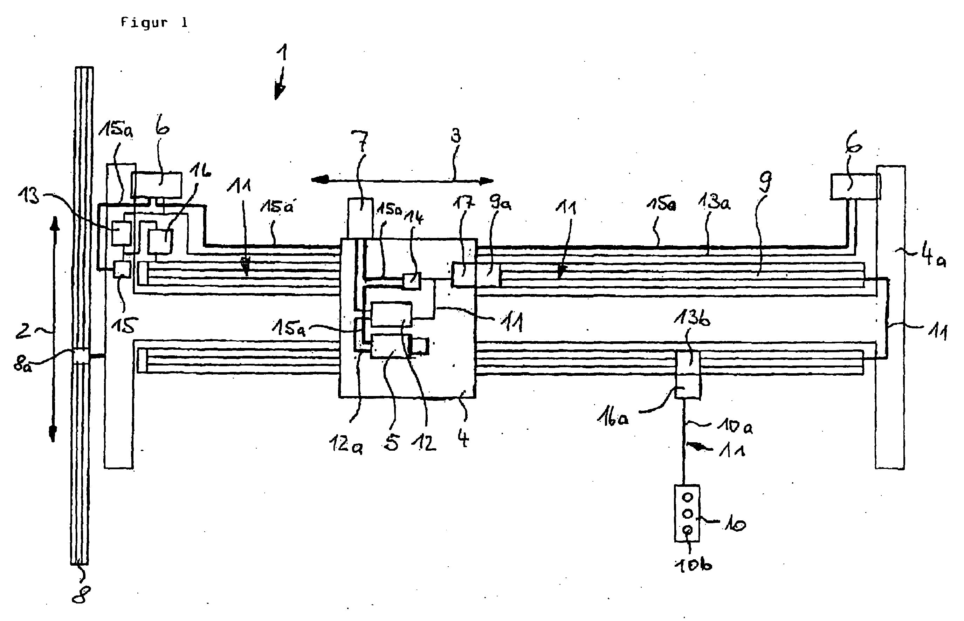

Ein Ausführungsbeispiel der Erfindung wird nachfolgend anhand einer Zeichnung beschrieben. Die einzige Figur zeigt eine Steuereinrichtung eines Brückenkrans mit separaten Sicherheitsschaltern.

Die Figur zeigt als schematische Darstellung einen Brückenkran 1 mit einer quer zur Kranfahrrichtung 2 in Katzfahrrichtung 3 verfahrbare Laufkatze 4 in einer Draufsicht, die an einem Kranträger 4a angeordnet sind. Die Laufkatze 4 trägt ein Hubwerk, dessen Hubwerksantrieb 5 schematisch dargestellt ist. Angetrieben wird der Brückenkran 1 von einem Kranfahrantrieb 6 und unabhängig davon die Laufkatze 4 von einem Katzfahrantrieb 7. Über ein Schleifleitungspaket 8 und einem darauf gleitenden Schleifer 8a wird der Brückenkran 1 und über ein Schleifleitungspaket 9 mit einem Schleifer 9a wird die Laufkatze 4 mit elektrischer Energie versorgt. Die Schleifleitungspakete 8, 9 weisen parallel zueinander angeordnete Schleifleitungen auf, welche über die Schleifer 8a, 9a mit den Antrieben 5, 6, 7 als die in der Figur dargestellten Aktoren verbunden sind.

Zum Bewegen des Brückenkrans 1 mit der Laufkatze 4 und dem Hubwerk (Antrieb 5) ist eine Steuereinrichtung vorgesehen.

Die Steuereinrichtung ist dezentral aufgebaut. Sie umfasst eine Steuereinheit 10 in Form eines an einer elektrischen Steuerleitung 10a hängenden Hängesteuerschalters mit Schalttasten 10b, der sich unterhalb des Brückenkrans 1 befindet und über einen seriellen bidirektionalen Datenbus 11 mit einer Antriebssteuerung 12 des Katzfahrantriebs 7 und einer Antriebssteuerung 13 des Kranfahrantriebs 6 verbunden ist, wobei die Antriebssteuerung 12 auch den Hubwerksantrieb 5 steuert. Der Datenaustauch zwischen der Antriebssteuerung 12 und dem Katzfahrantrieb 7 erfolgt über eine separate Verbindungsleitung 12a, der zwischen der Antriebssteuerung 13 und dem Kranfahrantrieb 6 über eine separate Verbindungsleitung 13a. Die Steuereinheit 10 ist mittels eines Schleifers 13b mit dem Schleifleitungspaket in elektrischem Kontakt; sie ist hier entlang des Schleifleitungspakets verschiebbar ausgeführt, wobei der Datenbus 11 über eine der Schleifleitungen verläuft. Über den Datenbus 11 werden Steuersignale für die Antriebe 5, 6, 7 übertragen.

Weiter überträgt der Datenbus 11 Sicherhieitssignale von der Steuereinheit 10 zu Sicherheitssteuerungen 14 (der Laufkatze 4) und 15 (des Brückenkrans 1), durch die eine oder mehrere Antriebe 5, 6, 7 stillgesetzt werden können. Mit der Steuereinheit 10 ist über eine Bedienperson ein Sicherheitssignal manuell auslösbar.

Die Sicherheitssteuerungen 14, 15 überwachen unabhängig von einander alle über den Datenbus 11 übertragenen Sicherheitssignale, d. h. alle sicherheitsrelevanten Signale. Die Sicherheitssignale werden von jeder Sicherheitssteuerung 14, 15 selbständig und unabhängig voneinander ausgewertet und beim Auftreten eines vorgegebenen Ereignisses, beispielsweise eines vorgegebenen Signals, wird ein Stillsetzbefehl an eine, mehrere oder alle Sicherheitssteuerungen 14, 15 ausgegeben und der entsprechende Antrieb 5, 6, 7 stillgesetzt. Hierzu verfügen die Sicherheitssteuerungen 14, 15 über nicht gezeigte Sicherheitsschalter als Sicherheitsschalteinheit. Diese schalten eine Freigabeleitung 15a mit angeschlossenem Notschalter, durch welche der gesamte Brückenkran 1 angehalten werden kann.

Zu den Sicherheitssignalen gehört auch ein Aktivitätssignal, das die Steuereinheit 10 in vorgegebenen Zeitabständen fortlaufend aussendet. Fehlt dieses Aktivitätssignals z.B. durch Ausfall der Steuereinheit 10, so ist dies eines der vorgegebenen Ereignisse, bei denen die Sicherheitssteuerungen 14, 15 jeweils ihren zugeordneten Antrieb 5, 6, 7 abschalten.

Die Sicherheitssteuerungen 14, 15 sind so ausgelegt, dass sie auch Signale weiterer Komponenten des Brückenkrans 1 überwachen können, insbesondere an verschiedenen Stellen des Krans 1 angebrachte Sensoren, beispielsweise zur Temperaturüberwachung der Antriebe 5, 6, 7.

Die Übertragung der Steuersignale und der Sicherheitssignale erfolgt größtenteils über Schleifleitungen, wobei Leitungstreiber 16, 16a, 17 vorgesehen sind, die eine zeitliche Folge der Datenbussignale nach einem vorgegebenen Protokoll gewährleisten. Die Signalübertragung über den Datenbus 11 erfolgt in Form von protokollierten Telegrammen.

Die Steuereinheit 10 kann selbstverständlich auch in einem externen Personal Computer realisiert sein.

Jeder Antriebssteuerung 12, 13 kann über den Datenbus 11 vorgegebene Informationen aller anderen Steuerungen 12, 13 usw. aber auch von den Antrieben 5, 6, 7 und von den Sensoren sowie von weiteren sicherheitsrelevanten Komponenten zur Verfügung gestellt werden.

Selbstverständlich kann der Datenbus 11 auch über eine Funkverbindung anstelle der elektrischen Steuerleitung 10a realisiert sein, wobei die Steuereinheit 10 mit einem Sender und einem Empfänger versehen und ein weiterer Sender und Empfänger oben am Datenbus 11 angeschlossen ist.

### Bezugszeichenliste

- 1: Brückenkran
- 2: Kranfahrrichtung
- 3: Katzfahrrichtung
- 4: Laufkatze
- 4a: Träger
- 5: Hubwerksantrieb
- 6: Kranfahrantrieb
- 7: Katzfahrantrieb
- 8: Schleifleitungspaket
- 8a: Schleifer
- 9: Schleifleitungspaket
- 9a: Schleifer
- 10: Steuereinheit
- 10a: Steuerleitung
- 10b: Schalttaste
- 11: Datenbus
- 12: Antriebssteuerung
- 12a: Verbindungsleitung
- 13: Antriebssteuerung
- 13a: Verbindungsleitung
- 13b: Schleifer
- 14: Sicherheitssteuerung
- 15: Sicherheitssteuerung
- 15a: Freigabeleitung
- 16: Leitungstreiber
- 16a: Leitungstreiber
- 17: Leitungstreiber

## Patentansprüche

1. Flurfreier Förderer mit einer Steuereinrichtung, der mit mindestens einem Aktor (6, 7) versehen ist, insbesondere einem Kranfahr- und Katzfahrantrieb, mit einer Steuersignalübertragung und einer Sicherheitssignalübertragung von einer Steuereinheit (10) zu dem mindestens einem Aktor (6, 7) über eine Signalverbindung, wobei die Steuereinheit (10) eine Sicherheitsschalteinheit zur Ausgabe von mindestens einem manuell auslösbaren Sicherheitssignal zum Stillsetzen von dem mindestens einem Aktor (6, 7) aufweist,
**dadurch gekennzeichnet,**
**dass** die Signalverbindung einen seriellen bidirektionalen Datenbus (11) aufweist, über den die Signalübertragung zwischen der Steuereinheit (10) und dem mindestens einen Aktor (6, 7) erfolgt, welcher hierzu mit einer entsprechenden Steuerung (12, 13) versehen ist, und dass pro Aktor (6, 7) eine Sicherheitssteuerung (14, 15) vorhanden ist, die alle über den Datenbus (11) übertragenen Sicherheitssignale überwacht und beim Auftreten mindestens eines vorgegebenen Ereignisses mindestens einen Stillsetzbefehl an die mindestens eine Steuerung (12, 13) ausgibt.

2. Flurfreier Förderer nach Anspruch 1,
**dadurch gekennzeichnet,**
**dass** die Steuereinheit (10) ein mit einer elektrischen Steuerleitung (10a) verbundener Hängeschalter und die Sicherheitsschalteinheit dessen Notschalter ist.

3. Flurfreier Förderer nach Anspruch 1 oder 2,
**dadurch gekennzeichnet,**
**dass** die Sicherheitssteuerungen (14, 15) einen Sicherheitsschalter umfassen, der den zugeordneten Aktor (6, 7) beim Auftreten eines Ereignisses stillsetzt.

4. Flurfreier Förderer nach Anspruch 3,
**dadurch gekennzeichnet,**
**dass** eines der vorgegebenen Ereignisse der Ausfall der Steuereinheit (10) ist.

5. Flurfreier Förderer nach Anspruch 3 oder 4,
**dadurch gekennzeichnet,**
**dass** die Steuereinheit (10) fortlaufend in vorgegebenen Zeitabständen ein Aktivitätssignal aussendet und dass bei dessen Fehlen der Ausfall der Steuereinheit (10) als Ereignis als eingetreten gilt.

6. Flurfreier Förderer nach einem der Ansprüche 1 bis 5,
**dadurch gekennzeichnet,**
**dass** die Sicherheitssteuerung (14, 15) in die Steuerung (12, 13), zu der sie gehört, integriert ist.

7. Flurfreier Förderer nach einem der Ansprüche 1 bis 6,
**dadurch gekennzeichnet,**
**dass** die Sicherheitssteuerung (14, 15) auch Signale weiterer Komponenten des Förderers überwacht, insbesondere Sensoren weiterer sicherheitsrelevanter Komponenten.

8. Flurfreier Förderer nach einem der Ansprüche 1 bis 7,
**dadurch gekennzeichnet,**
**dass** die die Steuersignalübertragung und die Sicherheitssignalübertragung umfassende Signalübertragung abschnittsweise über Schleifleitungen erfolgt, die über Leitungstreiber (16, 17) angesteuert werden, die eine zeitliche Folge der Datenbussignale nach einem vorgegebenen Protokoll gewährleisten.

9. Flurfreier Förderer nach einem der Ansprüche 1 bis 8,
**dadurch gekennzeichnet,**
**dass** die Steuereinheit (10) in einem PC realisiert ist.

## Claims

1. An overhead conveyor with a control device, which is provided with at least actuator (6,7), particularly a crane movement drive and a trolley movement drive, including a control signal transmission and a safety signal transmission from a control unit (10) to the at least one actuator (6, 7) via a signal connection, wherein the control unit (10) has a safety switching unit for producing at least one manually triggerable safety signal for stopping the at least one actuator (6, 7), **characterised in that** the signal connection includes a serial bidirectional data bus (11), via which the signal transmission between the control unit (10) and the at least one actuator (6, 7) occurs, which, for this purpose, is provided with a corresponding controller (12, 13), and that a safety controller (14, 15) is present for each actuator (6, 7) which monitors all of the safety signals transmitted via the data bus (11) and, on the occurrence of at least one pre-determined event, produces at least one stop command to the at least one controller (12, 13).

2. An overhead conveyor as claimed in claim 1, **characterised in that** the control unit (10) is a suspended switch connected to an electric control line (10a) and is the safety switch unit of its emergency switch.

3. An overhead conveyor as claimed in claim 1 or 2, **characterised in that** the safety controllers (14, 15) include a safety switch, which stops the associated actuator (6, 7) when an event occurs.

4. An overhead conveyor as claimed in claim 3, **characterised in that** one of the predetermined events is the failure of the control unit (10).

5. An overhead conveyor as claimed in claim 3 or 4, **characterised in that** the control unit (10) continuously emits an activity signal at predetermined time intervals and that if the latter should be absent the failure of the control unit (10) is deemed to have occurred as an event.

6. An overhead conveyor as claimed in one of claims 1 - 5, **characterised in that** the safety controller (14, 15) is integrated into the controller (12, 13) to which it belongs.

7. An overhead conveyor as claimed in one of claims 1 - 6, **characterised in that** the safety controller (14, 15) also monitors signals from further components of the conveyor, particularly sensors of further safety-related components.

8. An overhead conveyor as claimed in one of claims 1 - 7, **characterised in that** the signal transmission, which includes the control signal transmission and the safety signal transmission, is effected in sections via current collector lines, which are controlled by means of line drivers (16, 17), which ensure a temporal sequence of the data bus signals in accordance with a predetermined protocol.

9. An overhead conveyor as claimed in one of claims 1 - 8, **characterised in that** the control unit (10) is implemented in a PC.

## Revendications

1. Dispositif de transport suspendu doté d'un dispositif de commande et d'au moins un actionneur (6, 7), en particulier d'un entraînement de grue ou d'un entraînement de chariot roulant,
avec une transmission de signaux de commande et une transmission de signaux de sécurité par une unité de commande (10) vers le ou les actionneurs (6, 7) par une liaison de signalisation, l'unité de commande (10) présentant une unité de commutation de sécurité qui délivre au moins un signal de sécurité qui peut être déclenché manuellement pour arrêter le ou les actionneurs (6, 7),
**caractérisé en ce que**
la liaison de signalisation présente un bus de données série bidirectionnel (11) par lequel s'effectue la transmission des signaux entre l'unité de commande (10) et le ou les actionneurs (6, 7) qui sont dotés dans ce but d'une commande (12, 13) appropriée, et **en ce que** pour chaque actionneur (6, 7) est prévue une commande de sécurité (14, 15) qui surveille tous les signaux de sécurité transmis sur le bus de données (11) et qui, dans le cas où apparaît au moins un événement prédéterminé, délivre au moins un ordre d'arrêt à la ou aux commandes (12, 13).

2. Dispositif de transport suspendu selon la revendication 1, **caractérisé en ce que** l'unité de commande (10) est un commutateur suspendu relié à un conducteur électrique de commande (10a) et l'unité de commutation de sécurité est son commutateur de secours.

3. Dispositif de transport suspendu selon les revendications 1 ou 2, **caractérisé en ce que** les commandes de sécurité (14, 15) comprennent un commutateur de sécurité qui arrête l'actionneur (6, 7) associé en cas de survenue d'un événement.

4. Dispositif de transport suspendu selon la revendication 3, **caractérisé en ce que** l'un des événements prédéterminés est une défaillance de l'unité de commande (10).

5. Dispositif de transport suspendu selon les revendications 3 ou 4, **caractérisé en ce que** l'unité de commande (10) émet en permanence un signal d'activité à des intervalles de temps prédéterminés et **en ce qu'**en cas d'absence de ce signal, une défaillance de l'unité de commande (10) est considérée comme constituant l'événement.

6. Dispositif de transport suspendu selon l'une des revendications 1 à 5, **caractérisé en ce que** la commande de sécurité (14, 15) est intégrée dans la commande (12, 13) à laquelle elle appartient.

7. Dispositif de transport suspendu selon l'une des revendications 1 à 6, **caractérisé en ce que** la commande de sécurité (14, 15) surveille également les signaux d'autres composants du dispositif de transport et en particulier des détecteurs d'autres composants impliqués dans la sécurité.

8. Dispositif de transport suspendu selon l'une des revendications 1 à 7, **caractérisé en ce que** la transmission de signaux qui comprend la transmission de signaux de commande et la transmission de signaux de sécurité s'effectue par partie par des conducteurs en boucle qui sont commandés par des pilotes de conducteur (16, 17) qui assurent une succession temporelle des signaux dans le bus de données selon un protocole prédéterminé.

9. Dispositif de transport suspendu selon l'une des revendications 1 à 8, **caractérisé en ce que** l' unité de commande (10) est réalisée dans un PC.
